Europäisches Patentamt

(19) European Patent Office

Office européen des brevets

(11) Publication number: **0 109 246**
**B1**

(12) **EUROPEAN PATENT SPECIFICATION**

(45) Date of publication of patent specification: 06.05.87

(21) Application number: 83306775.4

(22) Date of filing: 07.11.83

(51) Int. Cl.⁴: **F 02 N 11/00,** F 02 N 17/00,
H 02 K 7/10

(54) Starting mechanism for internal combustion engine.

(30) Priority: 06.11.82 JP 168911/82

(43) Date of publication of application:
23.05.84 Bulletin 84/21

(45) Publication of the grant of the patent:
06.05.87 Bulletin 87/19

(84) Designated Contracting States:
DE FR GB

(56) References cited:
DE-A-3 121 058
FR-A- 623 534
FR-A-2 443 588
GB-A-1 014 787
GB-A-2 081 992

PATENTS ABSTRACTS OF JAPAN, vol. 6, no.
124(M-141)(1002), 9th July 1982
H. J. LEYHAUSEN, Die Meisterprüfung in
Kfz-Handwerk, Vogel-Verlag Würzburg, 1980,
page 1448
BUSSIEN, Automobiltechnisches Handbuch,
Techn. Verlag, Berlin 1965, page 844

(73) Proprietor: MITSUBISHI DENKI KABUSHIKI
KAISHA
2-3, Marunouchi 2-chome Chiyoda-ku
Tokyo 100 (JP)

(72) Inventor: Hamano, Isao
2-20 Higashi Yumesaki-dai
City of Himeji Hyogo Prefecture (JP)
Inventor: Morishita, Akira
432-5, Nozato
City of Himeji Hyogo Prefecture (JP)
Inventor: Akae, Yoshifumi
90, Tegara 2-chome
City of Himeji Hyogo Prefecture (JP)
Inventor: Tanaka, Toshinori
75, Higashi Nobusue 2-chome
City of Himeji Hyogo Prefecture (JP)
Inventor: Yabunaka, Kiyoshi Room No. 402
Kyoguchi Danchi No. 7 13, Joto-cho Shimizu
City of Himeji Hyogo Prefecture (JP)

(74) Representative: Lawson, David Glynne et al
MARKS & CLERK 57-60 Lincoln's Inn Fields
London WC2A 3LS (GB)

# Description

This invention relates to a starting mechanism for internal combustion engines.

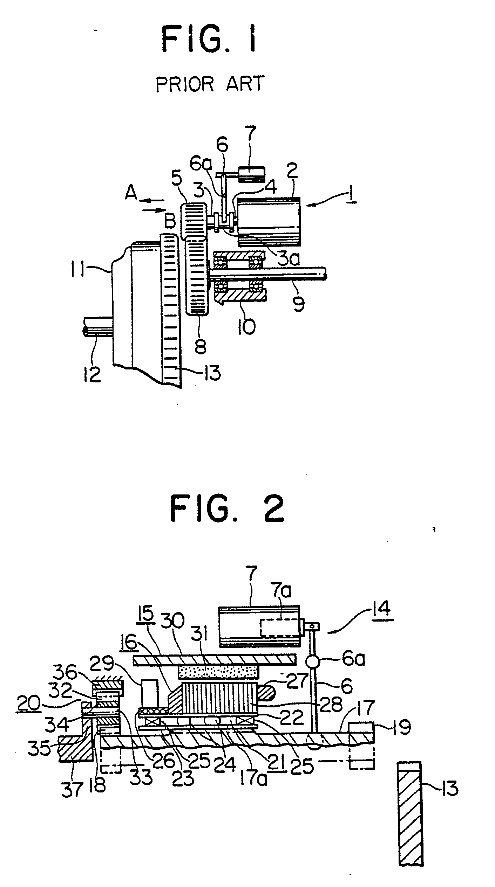

Figure 1 of the accompanying drawings shows a prior-art starting system for an internal combustion engine, comprising a starter unit 1 with a starter motor 2. A splined tube 3 is held in spline engagement with the rotary shaft 4 of the motor 2 in a manner to be slidable forwards and backwards on the shaft 4, and it has a pinion 5 fastened to the front end part thereof. A shift lever 6 engages an annular groove 3a in the splined tube 3 and can be pivoted about a fulcrum 6a by a plunger of a solenoid 7 so as to move the pinion 5 axially in the direction of arrow A or B. The pinion 5 meshes with a gear 8 when this pinion is reset, and the gear 8 is fastened to a power take-off shaft 9 journalled in a journal box 10. A flywheel 11 is fastened to the crankshaft 12 of an engine (not shown), and a ring gear 13 is snugly fitted (by shrinkage fit) on the outer peripheral surface of an end part of the flywheel 11.

In operation, when the solenoid 7 is energized, the shift lever 6 is pivoted about the fulcrum 6a by the attraction of the plunger 7a. Thus, the splined tube 3 is shifted frontwards (in the direction of arrow A) on the rotary shaft 4, and the pinion 5 is brought into mesh with the ring gear 13. Thereafter, when the motor 2 is started to generate torque, the ring gear 13 is rotated, and the engine, being a first load, is started through the crankshaft 12. Subsequently, when the solenoid 7 is deenergized, the splined tube 3 is reset in the direction of arrow B through the shift lever 6, and the mesh between the pinion 5 and the ring gear 13 is released. The resetting operation brings the pinion 5 into mesh with the spur gear 8. In this state, the motor 2 is rotating. Accordingly the gear 8 is rotated through the pinion 5, and a second load such as a pump, not shown, is driven by the power take-off shaft 9.

The power take-off shaft 9 for driving the second load such as the pump is installed in a manner to be spaced from the motor 2. This has led to the disadvantage that the system becomes complicated in structure and large in size on account of problems involved in the mounting of the starter.

The object of this invention is to overcome these disadvantages and to provide a starter mechanism which is simple and compact.

Patent Specification GB—A—1014787 describes a starter motor which has a secondary output at the end of the shaft opposite the starter pinion, permanently coupled to a hydraulic fluid pump. The starter motor can be energised to drive the pump, without operating the starter pinion.

The present invention provides a starting mechanism for an internal combustion engine, comprising a stator and a rotor therein, a shaft driven by the rotor and provided with a starter pinion at one end, a shift mechanism for moving the starter pinion axially into and out of engagement with the engine, and a second power take-off at the opposite end of the shaft for coupling the motor shaft to a second load device, characterised in that in known manner the rotor is tubular, and the shaft extends coaxially and slidably through the rotor, and the shift mechanism is arranged to move the shaft axially in the rotor, in that this axial movement causes the shaft to engage or disengage the starter pinion in that the second power take-off, is engaged with the shaft at least when the starter pinion is disengaged, in that a one-way clutch is provided in a coaxial space radially between the rotor and shaft for transmitting torque to the shaft in the direction appropriate to starting the engine, and the clutch includes a first cylindrical clutch body that is mounted on an inner peripheral surface of said rotor, and a second cylindrical clutch body that is clutch-coupled with said first clutch body; and the rotary shaft is penetratingly arranged on an inner peripheral portion of said second clutch body of said clutch, is axially movable relative to said second clutch body and rotates with said second clutch body.

In one aspect of performance of this invention, said one-way clutch (21) has said first clutch body (22) formed of a clutch outer cylinder and said second clutch body (23) formed of a clutch inner cylinder, and it comprises friction rollers (24) which are snugly fitted so as to bite in a narrowing direction of a wedge-shaped space defined between said clutch outer cylinder and said clutch inner cylinder.

The invention is illustrated by Fig. 2 of the accompanying drawings, which is a front view, partly in section, showing a starting system for an internal combustion engine according to an embodiment of this invention.

Figure 2 shows a starter motor 14 with a field system 15, an armature 16, and a rotary shaft 17 constructed as a slide shaft which is shifted rightwards and leftwards as viewed in Figure 2 by a shift lever 6. The rotary shaft 17 has a gear 18 and a pinion 19 at respective end parts thereof, and is mounted so as to protrude beyond both ends of the armature 16. In the illustrated state, the gear 18 is held in mesh with a planetary reduction gear 20. When the shaft 17 is shifted frontwards (rightwards as viewed in the figure) by the shift lever 6, (herein, the shaft 17 is readily shifted by virtue of a helical spline 17a formed in the surface of the shaft), the pinion 19 is brought into mesh with the ring gear 13 of the engine. Shown at numeral 7 is a solenoid, the plunger 7a of which is associated with the shift lever 6. Numeral 21 indicates a one-way clutch device. The one-way clutch device 21 is constructed of a clutch outer cylinder 22 which is mounted on the inner peripheral surface of the armature 16, a clutch inner cylinder 23 which is spline-fitted with the shaft 17, and friction rollers 24 which are snugly fitted so as to bite in the narrowing direction of a wedge-shaped space defined between the members 22 and 23. Sleeve bearings 25 are fitted in the inner peripheral space of the clutch outer cylinder 22 and in these the rotary shaft 17 is slidably journalled. The motor comprises a commutator 26, an armature coil 27, an armature core 28, and brushes 29 held in sliding contact with the commutator 26. The field system 15 is constructed of a cylindrical yoke 30, and poles 31 formed of permanent magnet members fastened on the inner peripheral surface of the yoke 30. The planetary reduction gear 20 comprises planet gears 32. A supporting pin 33 is pivotally mounted on the inner peripheral surface of a sleeve bearing 34 fitted on the inner peripheral surface of the planet gear 32, which journals the planet gear 32, and is fitted in a flange 35 having the function of an arm. The planet gear 32 meshes in an internal gear (ring gear) 36, and an output take-off shaft is fastened to the flange 35.

In operation, when the solenoid 7 is energized, the solenoid plunger 7a is attracted into the casing thereof to move leftwards as viewed in the figure. The shift lever 6 is turned counterclockwise about its fulcrum 6a, and the rotary shaft 17 held in engagement with the lower end part of the shift lever 6 is shifted forwards (rightwards as viewed in the figure), so that the pinion 19 is brought into mesh with the ring gear 13. Thereafter, a D.C. power source comprising a battery (not shown) is connected to the brush 29, the field system 15 is excited, and the armature 16 generates torque. This torque is transmitted to the rotary shaft 17 through the one-way clutch device 21, and the ring gear 13 is rotated through the pinion 19. Thus, the engine is started. After the starting of the engine, the pinion 19 is urged to over-rotate by the ring gear 13. However, only the rotary shaft 17 is over-rotated owing to the unidirectional torque transmission of the one-way clutch device 21, whereby the armature 16 is prevented from over-rotating and is freely rotated with no load. Subsequently, when the solenoid 7 is deenergized, the solenoid plunger 7a is reset into the illustrated state. Then, the pinion 19 is released from the ring gear 13, and the gear 18 is brought into mesh with the planet gear 32 of the planetary reduction gear 20. When the armature 16 is energized in this state (the state of Figure 2), the torque thereof is transmitted to the output take-off shaft 37 through the planetary reduction gear 20. Thus, the second load device (for example, an oil pump) as required is driven.

The embodiment has been explained as to the case where the planetary reduction gear 20 is interposed between the rotary shaft 17 and the output take-off shaft 37 with which the second load device is held in engagement. However, the two shafts 17 and 37 may be directly held in engagement by gear or spline engagement or the like. In this case, the system becomes very simple.

As set forth above, the one-way clutch is installed in the inner peripheral space of the armature core, the rotary shaft penetrating through the interior of the armature is arranged so as to be slidable frontwards and rearwards, and the pinion which is brought into meshing engagement with the ring gear of the engine forming the first load is disposed at the front end part of the rotary shaft, while the drive to the second load such as the pump is at the rear end part thereof. Therefore, the second load device can be mounted coaxially with the rotary shaft 17 of the armature, which is advantageous for the installation. Moreover, when the system is used for starting the engine, the second load does not become a load on the starter motor, and when it is used for driving the second load, it does not function as the starter, so that a system of high reliability is provided by a small and simple arrangement.

**Claims**

1. A starting mechanism for an internal combustion engine, comprising a stator (15) and a rotor (16) therein, a shaft (17) driven by the rotor and provided with a starter pinion (19) at one end, a shift mechanism (6, 7) for moving the starter pinion axially into and out of engagement with the engine, and a second power take-off (18, 20, 37) at the opposite end of the shaft for coupling the motor shaft (17) to a second load device, characterised in that in known manner the rotor (16) is tubular, and the shaft (17) extends coaxially and slidably through the rotor (16), and the shift mechanism (6, 7) is arranged to move the shaft (17) axially in the rotor (16), in that this axial movement causes the shaft to engage or disengage the starter pinion (19), in that the second power take-off (18, 20, 37), is engaged with the shaft at least when the starter pinion is disengaged, in that a one-way clutch (21) is provided in a coaxial space radially between the rotor (16) and shaft (17) for transmitting torque to the shaft in the direction appropriate to starting the engine, and the clutch (21) includes a first cylindrical clutch body (22) that is mounted on an inner peripheral surface of said rotor, and a second cylindrical clutch body (23) that is clutch-coupled with said first clutch body; and the rotary shaft (17) is penetratingly arranged on an inner peripheral portion of said second clutch body (23) of said clutch, is axially movable relative to said second clutch body and rotates with said second clutch body.

2. A starting mechanism according to claim 1 characterised in that said one-way clutch (21) has said first clutch body (22) formed of a clutch outer cylinder and said second clutch body (23) formed of a clutch inner cylinder, and it comprises friction rollers (24) which are snugly fitted so as to bite in a narrowing direction of a wedge-shaped space defined between said clutch outer cylinder and said clutch inner cylinder.

3. A starting mechanism according to claim 1 or 2 characterised in that said second clutch body (23) of said one-way clutch (21) and said rotary shaft (17) are spline-connected.

4. A starting mechanism according to any preceding claim characterised by power transmission gearing (20) for connecting the shaft (17) to the second load device.

5. A starting mechanism according to claim 4 characterised in that said gearing is planetary reduction gearing.

6. A starting mechanism according to any of claims 1 to 3 characterised by a spline portion formed in said rotary shaft (17) for connecting the shaft to the second load device.

## Patentansprüche

1. Startermechanismus für einen Verbrennungsmotor, mit einem Ständer (15) und einem darin angeordneten Läufer (16), mit einer Welle (17), die von dem Läufer angetrieben und mit einem Anlasserritzel (19) an einem Ende versehen ist, mit einem Verschiebungsmechanismus (6, 7), um das Anlasserritzel axial in und außer Eingriff mit dem Motor zu bewegen, und mit einem zweiten Nebenantrieb (18, 20, 37) am gegenüberliegenden Ende der Welle, um die Motorwelle (17) mit einer zweiten Last zu verbinden,

dadurch gekennzeichnet, daß in bekannter Weise der Läufer (16) rohrförmig ist und die Welle (17) sich koaxial und verschiebbar durch den Läufer (16) erstreckt und der Verschiebungsmechanismus (6, 7) so angeordnet ist, daß er die Welle (17) axial in dem Läufer (16) bewegt,

daß diese axiale Bewegung dafür sorgt, daß die Welle das Starterritzel (19) einrückt oder ausrückt,

daß der zweite Nebenantrieb (18, 20, 37) zumindest dann mit der Welle in Eingriff steht, wenn das Starterritzel ausgerückt ist,

daß eine in einer Richtung wirkende Kupplung (21) in einem koaxialen Raum radial zwischen dem Läufer (16) und der Welle (17) vorgesehen ist, um ein Drehmoment auf die Welle in der geeigneten Richtung zum Starten des Motors zu übertragen,

daß die Kupplung (21) einen ersten zylindrischen Kupplungskörper (22), der an einer Innenumfangsfläche des Läufers angebracht ist, und einen zweiten zylindrischen Kupplungskörper (23) aufweist, der kupplungsmäßig mit dem ersten Kupplungskörper gekoppelt ist,

und daß die drehbare Welle (17) hindurchgehend an einem Innenumfangsbereich des zweiten Kupplungskörpers (23) der Kupplung angeordnet ist, axial relativ zum zweiten Kupplungskörper beweglich ist und sich mit dem zweiten Kupplungskörper dreht.

2. Startermechanismus nach Anspruch 1, dadurch gekennzeichnet, daß bei der in einer Richtung wirkenden Kupplung (21) der erste Kupplungskörper (22) von einem Kupplungsaußenzylinder gebildet ist und der zweite Kupplungskörper (23) von einem Kupplungsinnenzylinder gebildet ist, und daß sie Reibrollen (24) aufweist, die bündig eingesetzt sind, so daß sie in einer sich verengenden Richtung eines keilförmigen Raumes angreifen, der zwischen dem Kupplungsaußenzylinder und dem Kupplungsinnenzylinder gebildet ist.

3. Startermechanismus nach Anspruch 1 oder 2, dadurch gekennzeichnet, daß der zweite Kupplungskörper (23) der in einer Richtung wirkenden Kupplung (21) und die drehbare Welle (17) mit Keilen miteinander verbunden sind.

4. Startermechanismus nach einem der vorhergehenden Ansprüche, gekennzeichnet durch ein Kraftübertragungsgetriebe (20), um die Welle (17) an die zweite Last anzuschließen.

5. Startermechanismus nach Anspruch 4, dadurch gekennzeichnet, daß das Getriebe ein Planetenuntersetzungsgetriebe ist.

6. Startermechanismus nach einem der Ansprüche 1—3, gekennzeichnet durch einen Keilbereich, der in der drehbaren Welle (17) ausgebildet ist, um die Welle mit der zweiten Last zu verbinden.

## Revendications

1. Mécanisme de démarrage pour moteur à combustion interne, comprenant un stator (15) et un rotor (16), un arbre (17) entraîné par le rotor et pourvu d'un pignon de démarreur (19) à une extrémité, un mécanisme de changement de vitesse (6, 7) pour déplacer axialement le pignon du démarreur afin de l'engager avec le moteur et de l'en désengager et une seconde prise de puissance (18, 20, 37) à l'extrémité opposée de l'arbre pour coupler l'arbre du moteur (17) à un second dispositif de charge, caractérisé en ce que d'une façon connue, le rotor (16) est tubulaire et l'arbre (17) s'étend coaxialement et de façon coulissable à travers le rotor (16), et que le mécanisme de changement de vitesse (6, 7) est agencé pour déplacer axialement l'arbre (17) dans le rotor (16), en ce que ce mouvement axial amène l'arbre à engager ou à désengager le pignon du démarreur (19), en ce que la seconde prise de puissance (18, 20, 37) est engagée avec l'arbre au moins quand le pignon du démarreur est désengagé en ce qu'un embrayage unidirectionnel (21) est placé radialement dans un espace coaxial entre le rotor (16) et l'arbre (17) pour transmettre d'un couple de rotation à l'arbre dans la direction convenant pour lancer le moteur, en ce que l'embrayage (21) comprend un premier corps d'embrayage cylindrique (22) qui est monté à une surface périphérique intérieure dudit rotor et un second corps d'embrayage cylindrique (23) qui est couplé par embrayage avec ledit premier corps d'embrayage; et en ce que l'arbre rotatif (17) est disposé pour pénétrer dans une partie périphérique intérieure dudit second corps d'embrayage (23) dudit embrayage, qu'il est déplaçable axialement par rapport audit second corps d'embrayage et tourne avec ledit second corps d'embrayage.

2. Un mécanisme de démarrage selon la revendication 1, caractérisé en ce que ledit embrayage unidirectionnel a son dit premier corps d'embrayage (22) formé d'un cylindre extérieur d'embrayage et ledit second corps d'embrayage (23) formé d'un cylindre intérieur d'embrayage et qu'il comprend des rouleaux de friction (24) qui sont assemblés avec serrage de façon à mordre dans une direction se rétrécissant d'un espace en forme de coin défini entre ledit cylindre extérieur de l'embrayage et ledit cylindre intérieur de l'embrayage.

3. Un mécanisme de démarrage selon la revendication 1 ou 2, caractérisé en ce que ledit second corps d'embrayage (23) dudit embrayage unidirectionnel (21) et ledit arbre rotatif (17) sont reliés par cannelures.

4. Un mécanisme de démarrage selon l'une quelconque des revendications précédentes, caractérisé par un engrenage (20) de transmission de prise de puissance pour relier l'arbre (17) au second dispositif de charge.

5. Un mécanisme de démarrage selon la revendication 4, caractérisé en ce que ledit engrenage est un engrenage planétaire démultiplicateur.

6. Un mécanisme de démarrage selon l'une des revendications 1 à 3, caractérisé par une partie cannelée formée dans ledit arbre rotatif (17) pour relier l'arbre au second dispositif de charge.

# FIG. I

PRIOR ART

# FIG. 2